# EUROPEAN PATENT APPLICATION

(11) **EP 3 742 215 A1**
(43) Date of publication of application: **25.11.2020**
(21) Application number: 19204726.4
(22) Date of filing: 22.10.2019
(51) Int. Cl.: G02B 19/00, G01N 21/25, G01J 3/50, H01L 27/146, G01J 1/02

(54) **COLOR SENSING MODULE**

(30) Priority: 23.05.2019 TW 108206462 U
(71) Applicant: Cal-Comp Big Data, Inc., New Taipei City 22201 (TW)
(72) Inventor: CHOU, Yi-Chia, 22201 NEW TAIPEI CITY (TW); CHENG, Chih-Feng, Taichung City (TW)
(74) Representative: Emde, Eric

(57) **Abstract**

A color sensing module is provided, comprising a substrate, a light emitting component, a sensing component, a light shield and a lens component. The light emitting component is adapted to provide a first beam. The lens component has a diverging portion and a condensing portion, wherein the diverging portion is arranged correspondingly to the light emitting component, and the condensing portion is arranged correspondingly to the sensing component. The first beam is transmitted to the surface of an object through the diverging portion of the lens component and reflected to form a second beam with color information, the second beam is transmitted to the sensing component through the condensing portion of the lens component, and the light shield blocks the first beam that does not pass through the lens component from being transmitted to the sensing component.

## Description

### BACKGROUND OF THE INVENTION

### 1. Field of the Invention

The present invention relates to a color sensing module.

### 2. Description of Related Art

Make-up is one of the ways of beauty, and is part of etiquette in some occasions. In addition, make-up may also increase the self-confidence of a make-up person, and even serve as one of the means of health care, so more and more cosmetic products and make-up techniques have been developed. In this regard, due to the variety of cosmetic products and make-up techniques, a tester must try a variety of different cosmetic products and make-up techniques in order to select a suitable make-up. In order to reproduce the color and make-up that can be presented in various cosmetic products in front of customers more effectively, it is one of the important topics at present to develop a color sensing device capable of effectively detecting colors.

### SUMMARY OF THE INVENTION

The present invention provides a color sensing module capable of effectively detecting colors.

The color sensing module according to the present invention comprises a substrate, a light emitting component, a sensing component, a light shield and a lens component. The light emitting component is located on the substrate and is adapted to provide a first beam. The sensing component is located on the substrate. The light shield is located on the substrate, wherein the light shield surrounds the light emitting component and the sensing component. The lens component has a diverging portion and a condensing portion. The diverging portion is arranged correspondingly to the light emitting component, and the condensing portion is arranged correspondingly to the sensing component. The first beam is transmitted to the surface of an object through the diverging portion of the lens component and reflected to form a second beam with color information, the second beam is transmitted to the sensing component through the condensing portion of the lens component, and the light shield blocks the first beam that does not pass through the lens component from being transmitted to the sensing component.

In an embodiment of the present invention, the lens component has a first surface and a second surface opposite to each other, the first surface faces the object, the second surface faces the light emitting component and the sensing component, and the second surface has a concave optical surface and a convex optical surface. The concave optical surface is located on the diverging portion, and is recessed toward the light emitting component. The convex optical surface is located on the condensing portion, and protrudes toward the sensing component.

In an embodiment of the present invention, the diverging portion and the condensing portion are separated from each other.

In an embodiment of the present invention, the diverging portion and the condensing portion respectively have a first surface and a second surface opposite to each other, the first surfaces face the object, and the second surfaces face the light emitting component and the sensing component. The second surface of the diverging portion has a concave optical surface that is recessed toward the light emitting component. The second surface of the condensing portion has a convex optical surface that protrudes toward the sensing component.

In an embodiment of the present invention, the diverging portion has a first side connecting surface, the first side connecting surface is connected to the first surface and the second surface of the diverging portion, the condensing portion has a second side connecting surface, and the second side connecting surface is connected to the first surface and the second surface of the condensing portion. The first side connecting surface and the second side connecting surface face to each other, and are coated with a light absorbing material.

In an embodiment of the present invention, the light shield has a first accommodating opening and a second accommodating opening, the light emitting component is located in the first accommodating opening, and the sensing component is located in the second accommodating opening.

In an embodiment of the present invention, the light shield has an upper surface and a lower surface, the upper surface faces the lens component, and the lower surface faces the substrate. The light shield further has a first annular connecting surface and a first inclined surface. The first annular connecting surface is connected to the lower surface and the first inclined surface, the first inclined surface is connected to the upper surface and the first annular connecting surface, and the first annular connecting surface and the first inclined surface form a periphery of the first accommodating opening.

In an embodiment of the present invention, the first inclined surface forms a first inclination angle relative to the lower surface, and the first inclination angle is 25 to 30 degrees.

In an embodiment of the present invention, the first annular connecting surface is at a first height, and the first height corresponds to the height of the light emitting component.

In an embodiment of the present invention, the light shield has an upper surface and a lower surface, the upper surface faces the lens component, and the lower surface faces the substrate. The light shield further has a second annular connecting surface and a second inclined surface. The second annular connecting surface is connected to the lower surface and the second inclined surface, the first inclined surface is connected to the upper surface and the second annular connecting surface, and the second annular connecting surface and the second inclined surface form a periphery of the second accommodating opening.

In an embodiment of the present invention, the second inclined surface forms a second inclination angle relative to the lower surface, and the second inclination angle is 45 to 55 degrees.

In an embodiment of the present invention, the second annular connecting surface is at a second height, and the second height corresponds to the height of the sensing component.

In an embodiment of the present invention, the lens component comprises a light transmission region and a light shielding region. The diverging portion and the condensing portion are correspondingly arranged in the light transmission region, and the light shielding region is coated with a light absorbing material.

In an embodiment of the present invention, the lens component and the light shield are integrally formed.

In an embodiment of the present invention, the color sensing module further comprises a shell provided with a groove. The lens component is arranged in the groove, and the shell and the lens component together form an internal accommodation space for accommodating the substrate, the light emitting component, the sensing component and the light shield.

In an embodiment of the present invention, the material of the light shield is rubber.

In an embodiment of the present invention, the first beam is a white light beam.

Based on the above, the color sensing module according to the present invention has the advantages that, through the configuration of the diverging portion and the condensing portion of the lens component, the first beam is transmitted to the surface of the object more effectively, the second beam with color information is concentrated on the sensing component more effectively, and then the sensing component may judge easily the color of the surface of the object based on the color information of the second beam. In addition, through the configuration of the light shield or the light absorbing material coated in a specific region of the lens component, the color sensing module may further filter the stray light formed by the first beam without color information, and the sensing component may judge more easily the color for the second beam with color information and further reproduce the color of the object.

In order to make the aforementioned features and advantages of the present invention more comprehensible, embodiments accompanied with figures are described in detail below.

### BRIEF DESCRIPTION OF THE DRAWINGS

Fig. 1A is a top view of a color sensing module according to an embodiment of the present invention.
Fig. 1B is a cross-sectional view of the color sensing module of Fig. 1A.
Fig. 1C is a partial enlarged view of the color sensing module of Fig. 1B.
Fig. 2A is a cross-sectional view of another color sensing module according to an embodiment of the present invention.
Fig. 2B is a partial enlarged view of the color sensing module of Fig. 2A.

### DESCRIPTION OF THE EMBODIMENTS

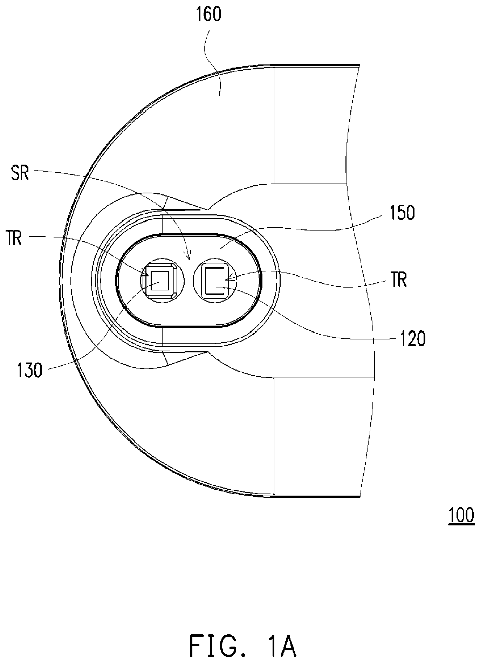

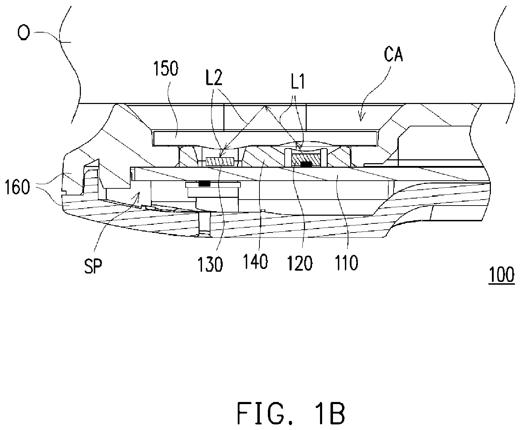

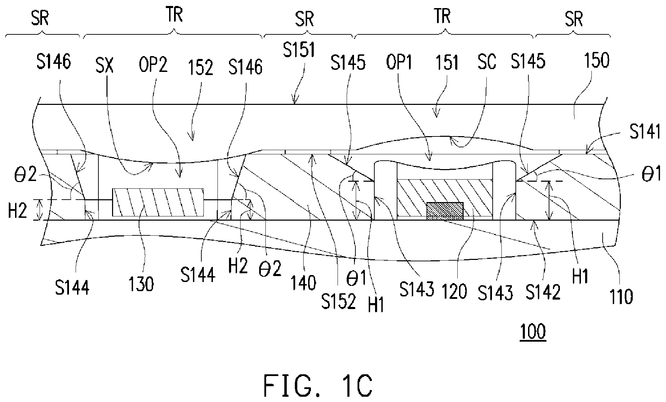

Fig. 1A is a top view of a color sensing module 100 according to an embodiment of the present invention. Fig. 1B is a cross-sectional view of the color sensing module 100 of Fig. 1A. Fig. 1C is a partial enlarged view of the color sensing module 100 of Fig. 1B. Referring to Fig. 1A and Fig. 1B, the color sensing module 100 of the embodiment comprises a substrate 110, a light emitting component 120, a sensing component 130, a light shield 140 and a lens component 150. The light emitting component 120 is adapted to provide a first beam L1. For example, in the embodiment, the substrate 110 may be a circuit board, the light emitting component 120 may be a three primary color light source, and the first beam L1 may be a three primary color beam or a white light beam. The sensing component 130 is, for example, a charge coupled device (CCD), a complementary metal-oxide semiconductor (CMOS), or other image sensing component 130, but the present invention is not limited thereto.

Specifically, as shown in Fig. 1A and Fig. 1B, in the embodiment, the light emitting component 120, the sensing component 130 and the light shield 140 are all on the substrate 110. In addition, as shown in Fig. 1B, in the embodiment, the color sensing module 100 further comprises a shell 160 provided with a groove CA. The lens component 150 is arranged in the groove CA, and the shell 160 and the lens component 150 together form an internal accommodation space SP for accommodating the substrate 110, the light emitting component 120, the sensing component 130 and the light shield 140.

Further, as shown in Fig. 1A and Fig. 1B, in the embodiment, the lens component 150 has a diverging portion 151 and a condensing portion 152, the diverging portion 151 is arranged correspondingly to the light emitting component 120, and the condensing portion 152 is arranged correspondingly to the sensing component 130. For example, in the embodiment, the diverging portion 151 and the condensing portion 152 of the lens component 150 are constituted by forming a concave optical surface SC and a convex optical surface SX on one surface of the lens component 150 respectively. In more details, as shown in Fig. 1B and Fig. 1C, the lens component 150 has a first surface S151 and a second surface S152 opposite to each other, the first surface S151 faces an outside object O, the second surface S152 faces the light emitting component 120 and the sensing component 130, and the second surface S152 has a concave optical surface SC and a convex optical surface SX. The concave optical surface SC is located on the diverging portion 151, and is recessed toward the light emitting component 120. The convex optical surface SX is located on the condensing portion 152, and protrudes toward the sensing component 130.

In this way, through the configuration of the diverging portion 151 of the lens component 150, the first beam L1 may be transmitted to the surface of the object O more effectively. In addition, when the first beam L1 is transmitted to the surface of the object O by the diverging portion 151 of the lens component 150, the first beam L1 is reflected by the surface of the object O to form a second beam L2 with color information, and the second beam L2 is transmitted to the sensing component 130 by the condensing portion 152 of the lens component. Through the configuration of the condensing portion 152 of the lens component 150, the second beam L2 may also be concentrated on the sensing component 130 more effectively, and then the sensing component 130 judges the color of the surface of the object O based on the color information of the second beam L2.

Moreover, with the development of communication technologies, the demand for image transmission and real-time image communication is increasing. Now a user cannot only directly see image information through a display device, but also can further select or adjust the image information through a control component (e.g., a touch panel on the display device). In the embodiment, after the sensing component 130 judges the color of the surface of the object O based on the color information of the second beam L2, the sensing component 130 may be connected to an electronic device having a virtual make-up system, and the color of the object O is reproduced on the electronic device.

On the other hand, as shown in Fig. 1A and Fig. 1B, in the embodiment, the lens component 150 further comprises a light transmission region TR and a light shielding region SR. The diverging portion 151 and the condensing portion 152 are correspondingly arranged in the light transmission region TR. For example, in the embodiment, the light shielding region SR may be formed though coating with a light absorbing material, and the light shielding region SR is arranged correspondingly to the light shield 140. Furthermore, as shown in Fig. 1B, in the embodiment, the light shield 140 has a first accommodating opening OP1 and a second accommodating opening OP2, the light emitting component 120 is located in the first accommodating opening OP1, and the sensing component 130 is located in the second accommodating opening OP2. In other words, in the embodiment, the light shield 140 surrounds the light emitting component 120 and the sensing component 130 without blocking the first beam L1 from traveling to the outside object O. For example, in the embodiment, the light shield 140 may be made of rubber, but the present invention is not limited thereto. In other embodiments, the light shield 140 may also be made of other materials as long as they can shield light.

Through the light shield 140, the light shield 140 between the light emitting component 120 and the sensing component 130 blocks the first beam L1 from being transmitted to the sensing component 130 without passing through the lens component 150, and the stray light formed by the first beam L1 without the color information is then filtered out, so that the sensing component 130 may judge the color of the second beam L2 with color information more easily, and further reproduce the color of the object O. In addition, the light shielding region SR of the lens component 150 arranged correspondingly to the light shield 140 may also shield part of the stray light, thereby improving the accuracy of reproducing the color of the object O by the sensing component 130.

In more details, as shown in Fig. 1C, in the embodiment, the light shield 140 has an upper surface S141 and a lower surface S142, the upper surface S141 faces the lens component 150, and the lower surface S142 faces the substrate 110. Specifically, as shown in Fig. 1C, the light shield 140 has a first annular connecting surface S143 and a first inclined surface S145. The first annular connecting surface S143 is connected to the lower surface S142 and the first inclined surface S145, the first inclined surface S145 is connected to the upper surface S141 and the first annular connecting surface S143, and the first annular connecting surface S143 and the first inclined surface S145 form a periphery of the first accommodating opening OP1. As shown in Fig. 1C, in the embodiment, the first annular connecting surface S143 is at a first height HI, the first inclined surface S145 forms a first inclination angle θ1 relative to the lower surface S142, the first height HI is designed correspondingly to the height of the light emitting component 120, and the first inclination angle θ1 is designed correspondingly to the divergence angle of the light emitting component 120, thereby avoiding blocking the travel of the first beam L1 to the diverging portion 151. For example, in the embodiment, the half divergence angle of the light emitting component 120 is 70 degrees, and the first inclination angle θ1 is 25 to 30 degrees.

Similarly, the light shield 140 further has a second annular connecting surface S144 and a second inclined surface S146. The second annular connecting surface S144 is connected to the lower surface S142 and the second inclined surface S146, the first inclined surface S145 is connected to the upper surface S141 and the second annular connecting surface S144, and the second annular connecting surface S144 and the second inclined surface S146 form a periphery of the second accommodating opening OP2. As shown in Fig. 1C, in the embodiment, the second annular connecting surface S144 is at a second height H2, the second inclined surface S146 forms a second inclination angle θ2 relative to the lower surface S142, the second height H2 is designed correspondingly to the height of the sensing component 130, the second inclination angle θ2 is designed correspondingly to the receiving angle of the sensing component 130, thereby avoiding blocking the travel of the second beam L2 to the condensing portion 152. In the embodiment, the second inclination angle θ2 is 45 to 55 degrees.

In this way, by the design of the first inclination angle θ1 and the second inclination angle θ2, the travel of the first beam L1 to the diverging portion 151 and the travel of the second beam L2 to the condensing portion 152 are not blocked, thereby increasing the intensity of the second beam L2 with color information acquired by the sensing component 130, judging the color of the second beam L2 with color information more easily, and further reproducing the color of the object O.

It should be noted that, in the foregoing embodiments, the lens component 150 and the light shield 140 are exemplified by individual components, but the present invention is not limited thereto. In other embodiments, the lens component 150 and the light shield 140 may also be integrally formed to form a single component. In this case, the material of the light shield 140 is the same as that of the lens component 150, and the first annular connecting surface S143, the first inclined surface S145, the second annular connecting surface S144 and the second inclined surface S146 are coated with a light absorbing material that can be used to shield light.

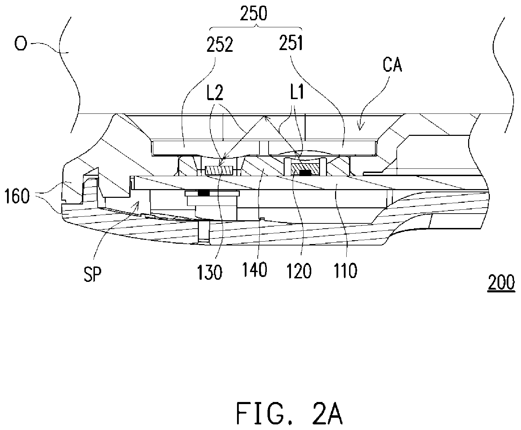

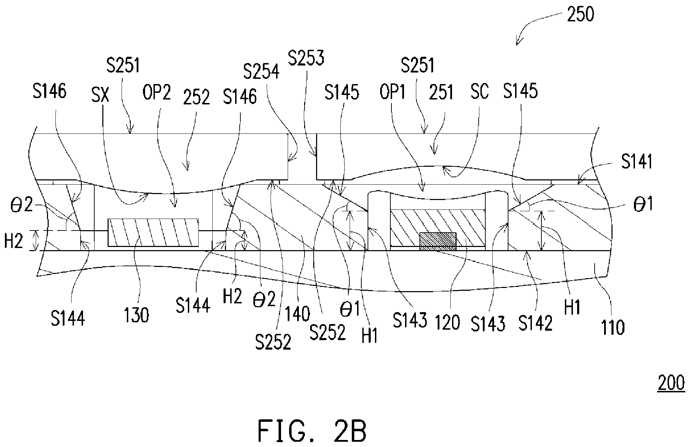

On the other hand, in the foregoing embodiments, the lens component 150 is exemplified by a single component having both the diverging portion 151 and the condensing portion 152, but the present invention is not limited thereto. In other embodiments, the lens component may also comprise a plurality of portions separated from each other, and the diverging portion and the condensing portion are each one of the portions. Further description is given below with reference to Fig. 2A and Fig. 2B.

Fig. 2A is a cross-sectional view of another color sensing module 200 according to an embodiment of the present invention. Fig. 2B is a partial enlarged view of the color sensing module of Fig. 2A. The color sensing module 200 of Fig. 2A and Fig. 2B is similar to the color sensing module 100 of Fig. 1A to Fig. 1C, with the differences described below. As shown in Fig. 2A and Fig. 2B, in the embodiment, the diverging portion 251 and the condensing portion 252 of the lens component 250 are respectively different portions separated from each other. Specifically, the diverging portion 251 and the condensing portion 252 respectively have a first surface S251 and a second surface S252 opposite to each other, the first surfaces S251 face the object O, and the second surfaces S252 face the light emitting component 120 and the sensing component 130. The second surface S252 of the diverging portion 251 has a concave optical surface SC that is recessed toward the light emitting component 120. The second surface S252 of the condensing portion 252 has a convex optical surface SX that protrudes toward the sensing component 130.

In this way, through the configuration of the diverging portion 251 and the condensing portion 252 of the lens component 250 of the color sensing module 200, the first beam L1 may be transmitted to the surface of the object O more effectively, the second beam L2 is concentrated on the sensing component 130 more effectively, and then the color sensing module 200 achieves a similar function as the color sensing module 100, so that the color sensing module 200 can achieve similar effects and advantages as the color sensing module 100, and the descriptions thereof are omitted herein.

In addition, as shown in Fig. 2A and Fig. 2B, in the embodiment, the diverging portion 251 has a first side connecting surface S253, the first side connecting surface S253 is connected to the first surface S251 and the second surface S252 of the diverging portion 251, the condensing portion 252 has a second side connecting surface S254, and the second side connecting surface S254 is connected to the first surface S251 and the second surface S252 of the condensing portion 252. The first side connecting surface S253 and the second side connecting surface S254 face to each other, and are coated with a light absorbing material.

In this way, through the configuration of the light absorbing material on the first side connecting surface S253 and the second side connecting surface S254, the first beam L1 transmitted in the diverging portion 251 of the lens component 250 may be blocked from being transmitted to the sensing component 130. In this way, the stray light formed by the first beam L1 without color information may be further filtered, so that the sensing component 130 may judge the color for the second beam L2 with color information more easily and further reproduce the color of the object.

Based on the above, the color sensing module according to the present invention has the advantages that, through the configuration of the diverging portion and the condensing portion of the lens component, the first beam is transmitted to the surface of the object more effectively, the second beam with color information is concentrated on the sensing component more effectively, and then the sensing component may judge easily the color of the surface of the object based on the color information of the second beam. In addition, through the configuration of the light shield or the light absorbing material coated in a specific region of the lens component, the color sensing module may further filter the stray light formed by the first beam without color information, and the sensing component may judge more easily the color for the second beam with color information and further reproduce the color of the object.

## Claims

1. A color sensing module (100, 200), comprising:
a substrate (110);
a light emitting component (120), located on the substrate (110) and adapted to provide a first beam (L1);
a sensing component (130), located on the substrate (110);
a light shield (140), located on the substrate (110), wherein the light shield (140) surrounds the light emitting component (120) and the sensing component (130); and
a lens component (150, 250), having a diverging portion (151, 251) and a condensing portion (152, 252), wherein the diverging portion (151, 251) is arranged correspondingly to the light emitting component (120), the condensing portion (152, 252) is arranged correspondingly to the sensing component (130), the first beam (L1) is transmitted to the surface of an object (O) through the diverging portion (151, 152) of the lens component (150) and reflected to form a second beam (L2) with color information, the second beam (L2) is transmitted to the sensing component (130) through the condensing portion (152, 252) of the lens component (150, 250), and the light shield (140) blocks the first beam (L1) that does not pass through the lens component (150, 250) from being transmitted to the sensing component (130).

2. The color sensing module (100) according to claim 1, wherein the lens component (150) comprises a first surface (S151) and a second surface (S152) opposite to each other, the first surface (S151) faces the object (O), the second surface (S152) faces the light emitting component (120) and the sensing component (130), the second surface (S152) comprises a concave optical surface (SC) and a convex optical surface (SX), the concave optical surface (SC) is located on the diverging portion (151) and is recessed toward the light emitting component (120), the convex optical surface (SX) is located on the condensing portion (152) and protrudes toward the sensing component (130).

3. The color sensing module (100, 200) according to claim 1, wherein the diverging portion (251) and the condensing portion (252) are separated from each other.

4. The color sensing module (100, 200) according to claim 3, wherein the diverging portion (251) and the condensing portion (252) respectively comprise a first surface (S251) and a second surface (S251) opposite to each other, the first surfaces (S251) face the object (O), the second surfaces (S252) face the light emitting component (120) and the sensing component (130), the second surface (S252) of the diverging portion (251) comprises a concave optical surface (SC) that is recessed toward the light emitting component (120), and the second surface (S252) of the condensing portion (252) comprises a convex optical surface (SX) that protrudes toward the sensing component (130).

5. The color sensing module (100, 200) according to claim 4, wherein the diverging portion (251) comprises a first side connecting surface (S253), the first side connecting surface (S253) is connected to the first surface (S251) and the second surface (S252) of the diverging portion (251), the condensing portion (252) comprises a second side connecting surface (S254), the second side connecting surface (S254) is connected to the first surface (S251) and the second surface (S252) of the condensing portion (252), and the first side connecting surface (S253) and the second side connecting surface (S254) face to each other and are coated with a light absorbing material.

6. The color sensing module (100, 200) according to claim 1, wherein the light shield (140) comprises a first accommodating opening (OP1) and a second accommodating opening (OP2), the light emitting component (120) is located in the first accommodating opening (OP1), and the sensing component (130) is located in the second accommodating opening (OP2).

7. The color sensing module (100, 200) according to claim 6, wherein the light shield (140) comprises an upper surface (S141) and a lower surface (S142), the upper surface (S141) faces the lens component (150, 250), the lower surface (S142) faces the substrate (110), the light shield (140) further comprises a first annular connecting surface (S143) and a first inclined surface (S145, the first annular connecting surface (S143) is connected to the lower surface (S142) and the first inclined surface (S145), the first inclined surface (S145) is connected to the upper surface (S141) and the first annular connecting surface (S143), and the first annular connecting surface (S143) and the first inclined surface (S145) form a periphery of the first accommodating opening (OP1).

8. The color sensing module (100, 200) according to claim 7, wherein the first inclined surface (S145) forms a first inclination angle (θ1) relative to the lower surface (S142_, and the first inclination angle is 25 to 30 degrees.

9. The color sensing module (100, 200) according to claim 7, wherein the first annular connecting surface (S143) is at a first height (HI), and the first height (HI) corresponds to the height of the light emitting component (120).

10. The color sensing module (100, 200) according to claim 6, wherein the light shield (140) comprises an upper surface (S141) and a lower surface (S142), the upper surface (S141) faces the lens component (150, 250), the lower surface (S142) faces the substrate (110), the light shield (140) further comprises a second annular connecting surface (S144) and a second inclined surface (S146), the second annular connecting surface (S144) is connected to the lower surface (S142) and the second inclined surface (S146), the first inclined surface (S145) is connected to the upper surface (S141) and the second annular connecting surface (S144), and the second annular connecting surface (S144) and the second inclined surface (S146) form a periphery of the second accommodating opening (OP2).

11. The color sensing module (100, 200) according to claim 10, wherein the second inclined surface (S146) forms a second inclination angle relative to the lower surface, and the second inclination angle is 45 to 55 degrees.

12. The color sensing module (100, 200) according to claim 10, wherein the second annular connecting surface (S144) is at a second height (H2), and the second height (H2) corresponds to the height of the sensing component (130).

13. The color sensing module (100, 200) according to claim 1, wherein the lens component (150, 250) comprises a light transmission region (TR) and a light shielding region (SR), the diverging portion (151) and the condensing portion (152) are correspondingly arranged in the light transmission region (TR), and the light shielding region (SR) is coated with a light absorbing material.

14. The color sensing module (100, 200) according to claim 1, further comprising a shell (160), wherein the shell (160) is provided with a groove (CA), the lens component (150, 250) is arranged in the groove (CA), and the shell (160) and the lens component (150, 250) together form an internal accommodation space (SP) for accommodating the substrate (110), the light emitting component (120), the sensing component (130) and the light shield (140).

15. The color sensing module (100, 200) according to claim 1, wherein the material of the light shield (140) is rubber, and the first beam (L1) is a white light beam.
